Europäisches Patentamt

European Patent Office

Office européen des brevets

(19)

(11) **EP 0 842 443 B1**

(12) **FASCICULE DE BREVET EUROPEEN**

(45) Date de publication et mention
de la délivrance du brevet:
**26.09.2001 Bulletin 2001/39**

(21) Numéro de dépôt: **97925136.0**

(22) Date de dépôt: **27.05.1997**

(51) Int Cl.$^7$: **G01V 3/38**

(86) Numéro de dépôt international:
**PCT/FR97/00925**

(87) Numéro de publication internationale:
**WO 97/45757 (04.12.1997 Gazette 1997/52)**

(54) **METHODE DE DETERMINATION AUTOMATIQUE DES BANCS DE STRATIFICATION DANS UN MILIEU**

VERFAHREN ZUR AUTOMATISCHEN BESTIMMUNG DER SCHICHTENFOLGE IN EINEM MEDIUM

METHOD FOR AUTOMATICALLY DETERMINING STRATIFICATION BEDS IN A SITE

(84) Etats contractants désignés:
**AT BE CH DE DK ES FI FR GB GR IE IT LI LU MC NL PT SE**

(30) Priorité: **31.05.1996 FR 9606740**

(43) Date de publication de la demande:
**20.05.1998 Bulletin 1998/21**

(73) Titulaire: **Elf Exploration Production**
**92400 Courbevoie (FR)**

(72) Inventeurs:
• **KESKES, Naamen**
**F-64000 Pau (FR)**
• **YE, Shinju**
**F-64000 Pau (FR)**

• **RABILLER, Philippe**
**F-64320 Lescar (FR)**

(74) Mandataire: **Bertrand, Didier**
**Cabinet FEDIT-LORIOT**
**38, Avenue Hoche**
**75008 Paris (FR)**

(56) Documents cités:
**GB-A- 2 268 274**     **US-A- 3 069 654**
**US-A- 5 299 128**

• **DERICHE R: "FAST ALGORITHMS FOR LOW-LEVEL VISION" IEEE TRANSACTIONS ON PATTERN ANALYSIS AND MACHINE INTELLIGENCE, vol. 12, no. 1, 1 janvier 1990, pages 78-87, XP000087783 cité dans la demande**

## Description

L'invention concerne une méthode de détermination automatique des bancs de stratification dans un milieu, notamment milieu géologique, à partir d'images de paroi de puits ou de déroulé de carottes de ce milieu. Elle se rapporte plus particulièrement à la génération d'images représentant, de manière très précise, les bancs de stratification dans ce milieu et les limites de ces bancs de stratification.

Les images électriques de paroi de puits forés dans un milieu géologique, telles qu'obtenues, par exemple, à l'aide des outils désignés sous les références FMI (Fullbore Formation Micro Imager) et/ou FMS (Formation Micro Scanner) et développés par la société SCHLUMBERGER, intéressent l'industrie pétrolière par la richesse de l'information qu'elles contiennent. Ces images sont utilisées presque exclusivement par les structuralistes pour déterminer finement les caractéristiques géométriques des plans de stratification et de fracturation dans les puits.

Les outils FMS et FMI permettent d'acquérir des images électriques à partir de mesures de la conductivité électrique locale de la paroi du puits et comportent, pour ce faire, quatre bras articulés, chacun équipé d'un patin, cas de l'outil FMS, ou d'un patin et d'un flap (patin accompagné), cas de l'outil FMI. Les patins de l'outil FMS comprennent chacun 16 électrodes et les patins et flaps de l'outil FMI comportent chacun 24 électrodes. Les patins et flaps desdits outils sont maintenus contre la paroi du puits grâce à un système mécanique, pendant toute la durée d'acquisition des images électriques.

Une image électrique de la paroi d'un puits est une vue de la paroi du puits et elle présente, lorsque le puits est ouvert pour en développer la paroi sur un plan, un axe x horizontal représentant la distribution azimutale des électrodes des patins et un axe vertical y le long duquel est définie la profondeur (cote) de l'outil dans le puits. Une image électrique FMS ou FMI de la paroi d'un puits est reconstituée par 4 ou 8 images patins. Comme on a 16 électrodes sur chaque patin de l'outil FMS et 24 électrodes sur chaque patin et chaque flap de l'outil FMI, une image patin (patin ou flap) est donc formée de 16 ou 24 colonnes (une colonne par électrode) et de plusieurs milliers de lignes, chaque pixel de l'image ayant une taille d'environ $2,5mm^2$. Le pas d'échantillonnage vertical pour l'outil FMS ou FMI est de 2,5 mm et le décalage latéral d'échantillonnage est de 3,8 mm pour l'outil FMS et de 2,5 mm pour l'outil FMI. Plus généralement, chaque image patin peut être considérée, dans le système d'axes (x,y) précité, comme étant constituée de p colonnes d'échantillons (p représente le nombre d'électrodes du patin), qui sont disposées chacune selon l'axe des y et sont espacées l'une de la suivante, selon l'axe des x, d'une distance correspondant au décalage latéral d'échantillonnage, les échantillons de chaque colonne étant séparés, l'un du suivant, par une distance correspondant au pas d'échantillonnage de l'outil.

L'image électrique est analysée en terme d'hétérogénéités planaires et d'hétérogénéités ponctuelles. L'hétérogénéité planaire regroupe les plans de stratification ainsi que les plan de fracturation du milieu géologique qui intersectent la stratification ; le reste de l'image électrique représente les hétérogénéités ponctuelles, c'est-à-dire les variations que l'on associe à des variations de paramètres pétrophysiques (porosité) ou bien à des variations de paramètres sédimentologiques (par exemple bioturbations).

Au point de vue de l'analyse d'image, les hétérogénéités planaires, présentes sur les images électriques, peuvent être catégorisées par leur conductivité par rapport au fond de l'image, leur netteté (contraste de niveau de gris), leur organisation (isolées ou regroupées par famille), leur fréquence (haute ou basse fréquence selon la direction et la profondeur) et leur visibilité (visible sur toutes les images patins ou seulement sur certaines d'entre elles).

On peut distinguer quatre types de plans importants, qui possèdent des caractéristiques particulières sur l'image électrique, à savoir :

- des plans qui sont reconnus par la variation de basse fréquence du fond de l'image et qui sont visibles sur tous les patins, lesdits plans étant identifiés comme des limites de bancs de stratification ;
- des plans de haute fréquence, répétitifs, généralement de faible contraste, toujours organisés par famille et visibles sur tous les patins, lesdits plans représentant les litages et étant situés à l'intérieur des bancs de stratification ;
- des plans coupant la stratification, qui ont une très forte conductivité, sont bien contrastés et sont soit isolés ou organisés par famille, lesdits plans étant, pour la plupart, attribuables à des plans de fracturation ouverte imprégnés par la boue conductrice ; et
- des plans qui coupent aussi les plans de stratification, sont plus ou moins isolés, conducteurs ou résistifs, souvent moins contrastés et généralement visibles sur tous les patins, lesdits plans étant interprétés comme des plans de fracturation colmatée et présentent une conductivité dépendant de la nature de l'agent de colmatage (ciment).

Lorsqu'un plan, qui peut être l'un ou l'autre des plans précités, intersecte une paroi de puits cylindrique d'axe non perpendiculaire au plan, l'intersection est vue sur l'image de la paroi de puits comme une sinusoïde d'équation y = d + A sin (x + φ), dans laquelle l'amplitude A et la phase φ correspondent respectivement au pendage et à l'azimut du plan, d étant la profondeur à laquelle est repérée la sinusoïde.

La notion de « banc de stratification » est une des notions fondamentales utilisées par le géologue sur le terrain ou par le sédimentologue, qui travaille sur des carottes prélevées dans le milieu géologique, pour l'étude des faciès d'unités sédimentaires. Les bancs de stratification sont définis comme étant des hétérogénéités planaires basse fréquence. Ils sont généralement plus contrastés et beaucoup plus épais que les litages et leur épaisseur peut varier largement, par exemple de quelques centimètres à plusieurs mètres. Les limites des bancs de stratification peuvent être marquées par des contrastes de niveau de gris ayant une transition franche ou une transition douce ; elles peuvent être aussi caractérisées simplement par un changement de texture.

Le pointé manuel des plans de stratification sur les images de paroi de puits est un travail de base, mais qui s'avère très complexe et fastidieux.

La reconnaissance automatique de plan à partir des images électriques de paroi de puits se heurte, elle aussi, à des difficultés notables, qui résident, d'une part, dans le taux de couverture faible de l'image (image découpée en 4 ou 8 images patins correspondant à un taux de couverture de 40 % à 80 %) et, d'autre part, dans les interférences qui se produisent entre les hétérogénéités géologiques. Si le taux de couverture de l'image était de 100 %, le problème de la reconnaissance des sinusoïdes intersections des plans avec la paroi du puits serait assimilable à un problème simple d'extraction de lignes dans les images. Par contre, pour un taux de couverture faible de l'image tel que précité, ce problème devient un problème, beaucoup plus complexe à résoudre, de reconnaissance de sinusoïdes définies par portions, avec, en outre, des contraintes supplémentaires liées à l'écartement vertical entre les images patins.

Deux méthodes ont été décrites pour la détermination automatique des pendages et azimuts des plans intersectant un puits foré dans un milieu géologique à partir d'images de paroi dudit puits, l'une utilisant un appariement des lignes de courant (contours) dans le cas d'images électriques (J.N. ANTOINE et J.P. DELHOMME : « A method to derive dips from bed boundaries in borehole images », Paper SPE 20 540 $\Omega$ (1990), pages 121 à 130, et également brevet des Etats Unis N° 5299128), et l'autre faisant appel à la transformation de HOUGH (brevet des Etats Unis N° 3069654) pour traiter des images acoustiques (D. TORRES , R. STRICKLAND et M. GIANZERO : « A new approach to determining dip and strike using borehole images », SPWLA , 31$^{st}$ Annual Logging Symposium, June 24-27, 1990).

Aucune méthode n'a toutefois été proposée, qui permettrait de résoudre de manière satisfaisante le problème de détermination des bancs de stratification dans un milieu, notamment milieu géologique, à partir d'images de la paroi d'un puits réalisé dans ledit milieu ou, ce qui est équivalent, à partir d'images de la surface latérale de carottes prélevées dans ce milieu.

L'invention a pour objet une méthode qui apporte une solution efficace au problème précité, ladite méthode facilitant la détermination des limites des bancs de stratification et permettant une reconnaissance desdits bancs quels que soient leurs types et leurs échelles.

La méthode selon l'invention est une méthode de détermination automatique des bancs de stratification dans un milieu, notamment milieu géologique, à partir d'images de paroi de puits ou de déroulé de carottes de ce milieu, chaque image étant représentative d'une bande de la paroi latérale du puits ou de la carotte, en référence à un axe vertical y pour la profondeur et à un axe horizontal x pour les azimuts, et étant définie par une pluralité de traces ou colonnes, qui sont dirigées, chacune, selon l'axe y, à partir de points espacés le long de l'axe x, et représentent la valeur d'un paramètre associé à une caractéristique de ladite paroi en fonction de la profondeur, la paroi latérale du puits ou de la carotte étant reconstituée par association de N images de paroi.

La méthode selon l'invention se caractérise en ce qu'elle consiste à :

-   segmenter chacune des N images de paroi, qui sont utilisées pour reconstituer l'image de la paroi latérale du puits ou de la carotte, en un premier ensemble de composantes connexes, chaque composante connexe consistant en une zone homogène de points obtenue par regroupement de points des traces de l'image de paroi de telle sorte que la différence des valeurs prises par un critère associé à la caractéristique imagée, par exemple un paramètre, notamment amplitude, associé à la caractéristique imagée, en deux points voisins quelconques de ladite zone ait une valeur inférieure à un seuil,

-   affecter tous les pixels d'une même composante connexe, d'un coefficient unique, ledit coefficient étant, par exemple, la valeur moyenne du paramètre, notamment amplitude, associé à la caractéristique imagée pour les points des traces regroupés dans ladite composante connexe,

-   transformer le premier ensemble de composantes connexes en un deuxième ensemble consistant uniquement en composantes connexes, dites régions connexes, qui touchent chacune aux deux bords droit et gauche de l'image, lesdites régions connexes étant constituées de toutes les composantes connexes formant régions connexes, qui sont déjà contenues dans le premier ensemble, et également de régions connexes, qui sont formées, à partir des composantes connexes du premier ensemble ne touchant pas chacune aux deux bords droit et gauche de l'image, dites zones connexes, par fusion d'une zone connexe donnée avec la zone connexe voisine la plus proche, en opérant la fusion de proche en proche et en réattribuant, après chaque fusion de deux zones connexes, un nouveau coefficient à la zone connexe résultante avant de procéder à une nouvelle fusion à partir des zones connexes restantes incluant ladite zone connexe résultante,

-   générer, pour chaque couple de régions connexes consécutives, un contour lissé marquant la frontière des deux régions connexes dudit couple, en recherchant, par suivi de contour, un contour enveloppe supérieur et un contour enveloppe inférieur de ladite frontière et en retenant, comme contour lissé, celui des deux contours enveloppes, qui fournit une plus faible variation au niveau du décalage vertical, et

- produire, dans le système d'axes (x, y), une image formée des régions connexes à contours lissés qui sont retenues, cette image étant dite image de bancs associée à l'image de paroi soumise à la segmentation et les contours entre régions connexes présents sur cette image de bancs, dits contours de stratification, étant chacun représentatifs d'une portion de l'intersection d'un plan de stratification avec la paroi latérale du puits ou de la carotte.

Eventuellement, on peut agréger chaque région connexe à contours lissés, pour laquelle le nombre de points constitutifs est inférieur à un seuil, avec la région connexe à contours lissés voisine la plus proche, par exemple celle ayant la valeur moyenne du paramètre la plus proche.

Lorsque le coefficient affecté à chaque composante connexe est la valeur moyenne du paramètre, notamment amplitude, associé à la caractéristique imagée pour les points des traces regroupés dans ladite composante connexe, la fusion précitée des zones connexes est en particulier réalisée en regroupant une zone connexe de valeur moyenne donnée du paramètre avec la zone connexe voisine ayant la valeur moyenne du paramètre plus proche par défaut, en opérant la fusion de proche en proche, à partir de la zone connexe de plus forte valeur moyenne du paramètre et par ordre décroissant de valeur moyenne du paramètre affectée à chaque zone connexe, et en recalculant, après chaque fusion de deux zones connexes, la valeur moyenne du paramètre de la zone connexe résultante avant de procéder à une nouvelle fusion à partir des zones connexes restantes incluant ladite zone connexe résultante.

Une étape additionnelle de la méthode selon l'invention consiste, à partir de N images de bancs dérivant chacune de l'une des N images de paroi utilisées pour reconstituer la paroi latérale du puits ou de la carotte, à apparier les contours de stratification de même polarité qui se correspondent dans lesdites N images de bancs, pour construire des sinusoïdes représentant les limites des bancs de stratification.

Cette étape de construction des sinusoïdes représentant les limites des bancs de stratification est avantageusement mise en oeuvre en réalisant une série d'opérations, qui, en prenant comme point de départ la situation où une sinusoïde limite de bancs $S_k$ a été déterminée, consiste à :

a) sélectionner parmi les contours de stratification (dénommés ci-après contours) présents sur les N images de bancs, qui sont situés en dessous de la sinusoïde $S_k$, un premier contour de référence choisi parmi le contour le plus proche de $S_k$ et le contour rencontré le premier après $S_k$ ;

b) déterminer dans les images de bancs ne renfermant pas le premier contour de référence, les contours de même polarité qui correspondent audit premier contour de référence et représentent N-1 contours primaires ;

c) construire toutes les sinusoïdes, qui, chacune, renferment le premier contour de référence et intègrent un nombre desdits contours primaires allant de 1 à N-1 et retenir, comme sinusoïde optimale $S_{01}$, celle desdites sinusoïdes qui présente la plus grande valeur $Q_1$, supérieure à un seuil $Q_s$, d'un critère Q prédéfini représentatif de la qualité des plans de stratification ;

d) sélectionner sur l'image de bancs renfermant le premier contour de référence, un second contour de référence consistant en le contour ayant même polarité que le premier contour de référence et le suivant immédiatement ;

e) déterminer dans les images de bancs ne renfermant pas le deuxième contour de référence, les contours de même polarité qui correspondent au second contour de référence et définissent N-1 contours secondaires ;

f) construire toutes les sinusoïdes, qui, chacune, renferment le second contour de référence et intègrent 1 à N-1 contours choisis parmi l'ensemble de tous les contours primaires et secondaires de telle sorte qu'il y ait un contour par image pour ce choix et retenir, comme sinusoïde optimale $S_{02}$, celle desdites sinusoïdes qui présente la plus grande valeur $Q_2$, supérieure au seuil $Q_s$, du critère de qualité Q ;

g) comparer les sinusoïdes optimales $S_{01}$ et $S_{02}$ et (i) valider la sinusoïde $S_{01}$ comme limite de bancs $S_{k+1}$ si la sinusoïde $S_{02}$ est parallèle à $S_{01}$ ou si elle croise $S_{01}$ et présente une valeur $Q_2$ du critère de qualité inférieure à $Q_1$ et marquer les contours de la sinusoïde validée $S_{01}$ sur les N images de bancs comme limite de bancs $S_{k+1}$ ou (ii) rejeter la sinusoïde optimale $S_{01}$ et supprimer le premier contour de référence, si la sinusoïde optimale $S_{02}$ croise la sinusoïde optimale $S_{01}$ et présente une valeur $Q_2$ du critère de qualité supérieure à la valeur $Q_1$ ; et

h) répéter la série d'opérations a) à g) à partir des contours présents sur les N images de bancs, qui sont situés en dessous de la sinusoïde $S_{k+1}$ dans le cas d'opérations selon g(i) ou en dessous de la sinusoïde $S_k$ dans le cas d'opérations selon g(ii), et ce, jusqu'aux derniers contours à apparier présents sur les N images de bancs.

Pour obtenir la première sinusoïde $S_1$ limite de bancs, on réalise la séquence d'opérations consistant à :

- sélectionner sur chacune des N images de bancs le premier contour de stratification (dénommé ci-après contour),
- choisir parmi lesdits premiers contours sélectionnés, le contour de plus faible profondeur comme contour de référence,

- déterminer dans les images de bancs ne renfermant pas le contour de référence, les contours de même polarité, qui correspondent au contour de référence et définissent N-1 contours primaires, et

- construire la sinusoïde optimale $S_1$ soit (i) par pointé, soit (ii) en appliquant le processus selon les points c) à g) définis précédemment.

Les images de paroi, que l'on traite par la méthode selon l'invention, peuvent être des images de puits ou de déroulé de carottes de milieux divers et elles consistent tout particulièrement en images, notamment images électriques comme les images FMS ou FMI, de paroi de puits forés dans un milieu géologique ou en images de paroi latérale de carottes prélevées dans ledit milieu géologique.

Préalablement à leur segmentation en composantes connexes, les images de paroi peuvent être soumises, si besoin est, à un filtrage pour en éliminer les hétérogénéités planaires du type des fractures ouvertes et faciliter ainsi la détection de la stratification. Pour ce faire, on peut opérer, par exemple, en recherchant lesdites fractures par détection, par seuillage, des maxima locaux, représentatifs desdites fractures, sur l'image du laplacien produite à partir de l'image de paroi correspondante, puis en recherchant les minima locaux (bases) adjacents à ces maxima locaux sur l'image du laplacien et ensuite en effectuant une interpolation aux points de l'image correspondant aux maxima locaux à partir des valeurs des encaissants. L'image du laplacien peut être générée, notamment, par le filtre de DERICHE monodirectionnel suivant l'axe y de profondeur (R. DERICHE : « Fast algorithms for low-level vision, IEEE Transactions on Pattern Analysis and Machine Intelligence, IEEE Trans. PAMI-12 n° 1 (1990), pages 78 à 87).

Lors de la segmentation de chacune des N images de paroi, qui sont utilisées pour reconstituer l'image de la paroi latérale du puits ou de la carotte, en un ensemble de composantes connexes, le regroupement de points des traces de l'image de paroi en une zone homogène constituant une composante connexe, peut être réalisé en faisant appel à toute méthode connue à cet effet. On peut opérer en particulier de telle sorte que la différence des valeurs prises par un paramètre associé à la caractéristique imagée, par exemple l'amplitude de ladite caractéristique, en deux points voisins quelconques de ladite zone ait une valeur inférieure à un seuil S et que, lors dudit regroupement, la différence entre la valeur du paramètre en un nouveau point à regrouper et la moyenne des valeurs dudit paramètre pour les points déjà regroupés ait également une valeur inférieure à un seuil $S_m$. Avantageusement, ledit regroupement peut être effectué de telle sorte que la différence des valeurs prises par le paramètre associé à la caractéristique imagée en deux points voisins de ladite zone suivant l'axe x, ait une valeur inférieure à un seuil $S_x$, que la différence des valeurs prises par ledit paramètre en deux points voisins de la zone suivant l'axe y ait une valeur inférieure à un seuil $S_y$ et que la différence entre la valeur du paramètre en un nouveau point à regrouper et la moyenne des valeurs dudit paramètre pour les points déjà regroupés ait également une valeur inférieure à un seuil $S_m$.

Lesdits seuils $S_x$ et $S_y$ peuvent avoir des valeurs identiques, par exemple lorsque l'image de paroi à segmenter est homogène, ou au contraire des valeurs différentes en fonction des anomalies que l'on peut rencontrer lors de l'acquisition des images de paroi. En particulier, lorsque l'homogénéité entre les traces des images de paroi est mauvaise, par suite des artefacts verticaux, le seuil $S_x$ a une valeur supérieure à $S_y$. De même, il est avantageux, pour ne pas générer de composantes connexes trop petites, que le seuil $S_m$ ait une valeur supérieure à $S_x$.

Ces seuils peuvent être fixés automatiquement à l'aide de statistique, d'histogrammes des images du gradient dans les directions x et y, convolués par les masques [-1,

1] et $[-1, 1]^T$. Sur la base d'expériences, la demanderesse a trouvé que l'on pouvait avantageusement choisir des seuils $S_x$, $S_y$ et $S_m$ tels que $S_x = \gamma G_m^x$ , $S_y = \gamma G_m^y$ et $S_m = \gamma G_m^{x'}$, avec dans ces formules $G_m^x$ et $G_m^y$ désignant respectivement les moyennes des gradients des images de paroi dans les directions x et y, $G_m^{x'}$ représentant la moyenne de la partie supérieure à $G_m^x$ du gradient suivant x et $\gamma$ étant un coefficient de seuil, qui dans la plupart des cas est choisi égal à 1.

Comme indiqué plus haut, lors de l'étape de construction des sinusoïdes limites de bancs, on constitue des groupes de contours renfermant N contours chacun pris sur l'une des N images de bancs, lesdits contours comportant un contour de référence et N-1 contours associés ayant même polarité que le contour de référence et correspondant audit contour. Par polarité d'un contour, on entend le signe du gradient vertical (selon y) de l'image aux différents points le long du contour.

Pour la détermination desdits contours de même polarité qui se correspondent dans les N images de bancs, on tient compte du fait que pour un banc donné, les écarts $\Delta T_b$ de son épaisseur pour les N images de bancs doivent être faibles et l'on se fixe un seuil en dessous duquel doivent être situés lesdits écarts. Notamment, la correspondance entre le contour de référence et les N-1 contours de même polarité que le contour de référence, est réalisée de telle sorte que la variation d'épaisseur du banc limité supérieurement par lesdits contours, en passant de l'image contenant le contour de référence à l'une quelconque des autres images, soit inférieure à un seuil.

Le critère de qualité Q caractérisant les plans de stratification, qui est utilisé pour la recherche de la sinusoïde optimale parmi toutes les sinusoïdes qui, chacune, renferment le contour de référence et intègrent 1 à N-1 des autres contours associés audit contour de référence, est un critère composite intégrant des facteurs rendant compte, notamment, de la régularité ou rugosité du plan, de l'homogénéité des bancs mesurée par le gradient moyen vertical de l'image, de la texture des bancs, etc.

Par exemple, pour une sinusoïde appariée à partir de Qm contours, on peut, selon l'invention, utiliser un critère de qualité Q défini par la relation :

$$Q = \lambda \quad Q_{gd}^{a} \quad \times \quad Q_{ct}^{b} \quad \times \quad Q_{cr}^{c} \quad \times \quad Q_{dy}^{d} \quad \times \quad Q_{m}^{e}$$

dans laquelle :

- $\lambda$ désigne une constante de normalisation ;
- a, b, c, d et e représentent des poids pour les critères qu'ils affectent, lesdits poids pouvant prendre, avantageusement, la valeur 1 pour a, b, c et d et la valeur 2 pour e ;
- Qgd représente le contraste local du plan sur l'image du gradient, ledit contraste local rendant compte du contraste entre bancs et étant exprimé par la relation Qgd = Mgd : Vgd, où Mgd est la moyenne des gradients le long de la sinusoïde estimée sur les N images de paroi filtrées par le filtre du gradient monodimensionnel Gy suivant la direction y et Vgd est l'écart-type des images du gradient calculé sur la totalité des N images de paroi ;
- Qct représente le contraste global du plan, ledit contraste global rendant compte des contrastes basse fréquence le long de la sinusoïde et étant exprimé comme la moyenne des N/2 différences $\Delta$ de plus petites valeurs absolues prises dans la série des N différences $\Delta$, dont chacune correspond à l'une des N images et représente la différence entre les valeurs moyennes d'amplitude du banc supérieur et du banc inférieur calculées dans deux fenêtres suivant la sinusoïde juste au dessus et en dessous du plan dans l'image considérée ;
- Qcr représente la corrélation globale entre les N images, ladite corrélation rendant compte de l'homogénéité de la texture encadrant la sinusoïde et étant définie par la relation : $Qcr = \frac{1}{max(Vsup, Vinf, V\Delta)}$, où Vsup et Vinf sont respectivement les écarts-types des amplitudes associées, d'une part, au banc supérieur et, d'autre part, au banc inférieur, calculés, dans la même fenêtre que pour Qct, sur les N images et $V_{\Delta}$ est l'écart-type des N différences $\Delta$ définies plus haut ;
- Qdy représente la planéité ou rugosité du plan, qui est exprimée par la relation $Qdy = \frac{1}{\Delta Ey}$, où $\Delta Ey$ mesure la moyenne des écarts verticaux entre les points de la sinusoïde optimale appariée et les points correspondants ayant contribué à la construction de ladite sinusoïde ; et
- Qm représente le nombre d'images retenues pour l'appariement de la sinusoïde.

D'autres caractéristiques et avantages apparaîtront à la lecture de la description, donnée ci-après, d'un mode de mise en oeuvre de la méthode selon l'invention présenté en référence aux dessins annexés sur lesquels :

- la figure 1 montre une série d'images électriques FMS de la paroi d'un puits foré dans un milieu géologique pour un premier intervalle de profondeur ;
- la figure 2 schématise la segmentation d'une image de la figure 1 en composantes connexes ;
- la figure 3 représente schématiquement la frontière entre deux régions connexes et les contours enveloppes associés ;
- la figure 4 représente les images de bancs associées aux images électriques de la figure 1 ;
- la figure 5 représente schématiquement un appariement de contours présents sur les images de bancs pour fournir une sinusoïde limite de bancs ;
- les figures 6a et 6b représentent des sinusoïdes limites de bancs marquées sur des images FMS (figure 6a) et les images des régions connexes associées représentant les bancs de stratification (figure 6b) pour un deuxième intervalle de profondeur.

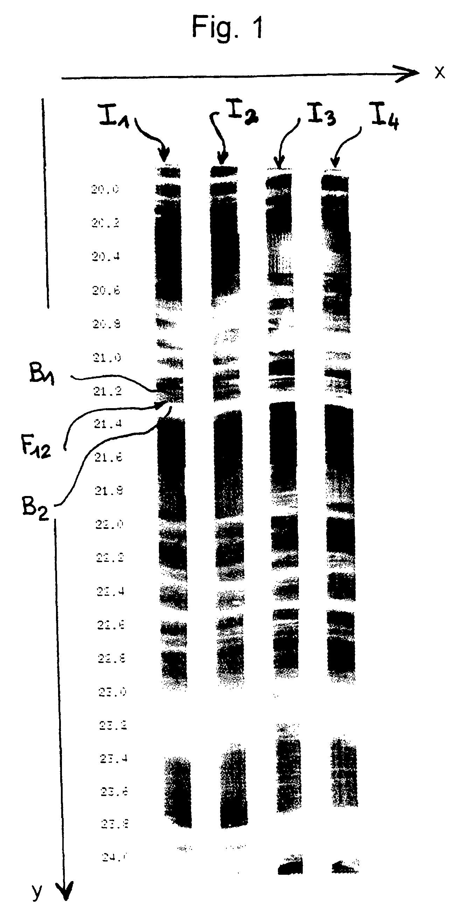

Dans un puits foré dans un milieu géologique, on descend un outil de mesure de conductivité du type FMS, par exemple, équipé de quatre patins de mesure munis, chacun, d'électrodes de mesure de conductivité comme indiqué précédemment, à l'aide duquel on produit une image électrique d'une partie de la paroi du puits. Cette technique est bien connue des spécialistes et ne sera donc pas décrite dans le détail. Chaque patin de l'outil fournit une image électrique sous la forme d'une bande verticale comportant une pluralité de traces ou colonnes (autant de traces ou colonnes que d'électrodes dans le patin de mesure), qui sont dirigées selon un axe vertical y gradué en profondeur et sont espacées selon un axe horizontal x gradué en azimut, chaque trace ayant une amplitude représentative de la conductivité de la paroi du puits mesurée par l'électrode associée et enregistrée en fonction de la profondeur. On obtient ainsi quatre images $I_1$ à $I_4$, comme représenté sur la figure 1, pour reconstituer la paroi du puits. Sur ces images sont visibles des zones telles que $B_1$ et $B_2$, représentant des bancs du milieu géologique, séparées par des contours tels que $F_{12}$, qui sont chacun représentatifs d'une portion d'une sinusoïde trace de l'intersection d'un plan de stratification, séparant deux bancs consécutifs, avec la paroi latérale du puits de mesure.

Chacune des images électriques $I_1$ à $I_4$ peut être considérée, dans le système d'axes (x,y), comme une matrice de points $M_{ij}$ de coordonnées $(x_i, y_j)$, $x_i$ représentant l'azimut de l'électrode i générant la trace $T_i$ et $y_j$ la profondeur à laquelle est effectuée la mesure par l'électrode. Lesdits points sont séparés l'un du suivant selon l'axe y d'une distance égale au pas d'échantillonnage de l'outil de mesure et sont distants l'un du suivant selon l'axe x d'une distance représentative de la différence d'azimut entre deux traces consécutives (décalage latéral d'échantillonnage). Chaque point $M_{ij}$ est affecté d'une valeur représentative de la conductivité mesurée au point de coordonnées $(x_i, y_j)$ sur la paroi du puits, ladite valeur étant l'amplitude de la trace $T_i$ au point $M_{ij}$.

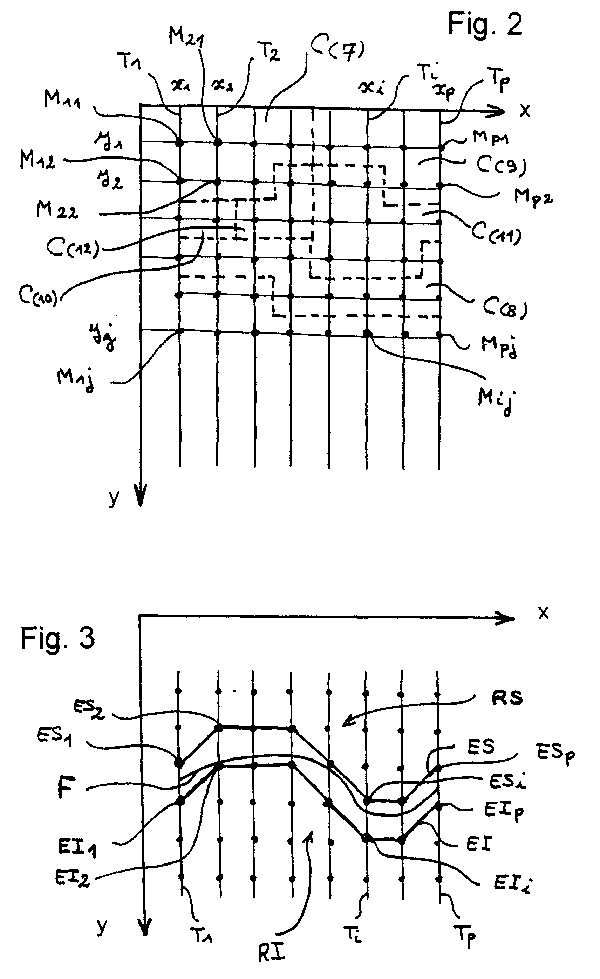

Dans un premier stade, chaque image électrique est segmentée en composantes connexes. Pour ce faire, on se fixe un seuil $S_x$, par exemple égal au gradient moyen $G_m^x$, selon l'axe x, de l'image à segmenter, un seuil $S_y$, par exemple égal au gradient moyen $G_m^y$, selon l'axe y, de l'image à segmenter et un seuil $S_m$, par exemple égal à la moyenne de la partie supérieure à $G_m^x$ du gradient suivant l'axe x de l'image à segmenter. Comme schématisé sur la figure 2, on regroupe dans une même zone appelée composante connexe les différents points des traces de l'image à segmenter, par exemple $I_3$, qui sont tels que deux points voisins quelconques de ladite composante, par exemple $M_{11}$ et $M_{21}$, selon l'axe x soient affectés d'amplitudes qui diffèrent d'une valeur inférieure à $S_x$, que deux points voisins quelconques de ladite composante, par exemple $M_{11}$ et $M_{12}$, selon l'axe y soient affectés d'amplitudes qui diffèrent d'une valeur inférieure à $S_y$ et que, lors du regroupement desdits points, la différence entre l'amplitude affectée à tout nouveau point voisin, par exemple $M_{22}$, candidat au regroupement et la moyenne des amplitudes affectées aux points déjà regroupés, par exemple $M_{11}$, $M_{12}$ et $M_{21}$ soit inférieure au seuil $S_m$. Tous les pixels d'une même composante connexe sont affectés d'une amplitude qui est égale à la valeur moyenne des amplitudes affectant les différents points regroupés dans la composante connexe. La figure 2 montre schématiquement six composantes connexes C(12), C(11), C(10), C(9), C(8) et C(7), le nombre entre parenthèses indique la valeur moyenne d'amplitude affectée à la composante connexe. Comme il apparaît sur ladite figure 2, les composantes connexes peuvent toucher, chacune, aux deux bords droit et gauche de l'image, comme c'est le cas de la composante connexe C(8), et elles sont alors dénommées régions connexes ou bien elles touchent seulement à un seul bord, droit ou gauche, de l'image, comme c'est le cas des composantes connexes C(7), C(9), C(10) et C(11) ou ne touchent à aucun desdits bords, comme c'est le cas de la composante connexe C(12), et elles sont alors dénommées zones connexes.

Dans un deuxième stade, l'ensemble fourni par les composantes connexes issues de la segmentation de l'image est transformé en un deuxième ensemble consistant uniquement en régions connexes, c'est-à-dire, comme indiqué plus haut, en composantes connexes touchant, chacune, aux deux bords droit et gauche de l'image, ledit deuxième ensemble étant constitué de toutes les composantes connexes formant régions connexes, qui sont déjà contenues dans le premier ensemble, et également de régions connexes, qui sont formées, à partir des composantes connexes du premier ensemble ne touchant pas chacune aux deux bords droit et gauche de l'image, dites zones connexes. Le passage des zones connexes aux régions connexes en dérivant est réalisé par fusion d'une zone connexe de valeur moyenne d'amplitude donnée avec la zone connexe voisine ayant la valeur moyenne d'amplitude la plus proche par défaut, en opérant la fusion de proche en proche, à partir de la zone connexe de plus forte valeur moyenne d'amplitude et par ordre décroissant de valeur moyenne d'amplitude affectée à chaque zone connexe, la valeur moyenne d'amplitude de la zone connexe résultant de la fusion de deux zones connexes voisines étant recalculée avant de procéder à une nouvelle fusion à partir des zones connexes restantes incluant ladite zone connexe résultante. Ainsi, en se référant à la figure 2, on fusionne d'abord la zone connexe C(12) avec la zone connexe C(11), puis la zone connexe résultant de cette fusion, dont l'amplitude moyenne est égale à 11,25, est fusionnée avec la zone connexe C(10). L'ensemble des trois zones connexes C(12), C(11) et C(10) fusionnées touche maintenant aux deux bords droit et gauche de l'image et constitue une région connexe. On fusionne ensuite les deux zones connexes C(9) et C(7) voisines pour former une autre région connexe. A l'issue de la fusion effectuée sur toutes les zones connexes, on obtient un deuxième ensemble (image) formé uniquement de régions connexes.

A partir de cet ensemble de régions connexes, on génère, pour chaque couple de régions connexes adjacentes, un contour lissé marquant la frontière entre les deux régions connexes dudit couple. Ceci est réalisé en recherchant, par suivi de contour, un contour enveloppe supérieur et un contour enveloppe inférieur de ladite frontière et en retenant, comme contour lissé, celui des deux contours enveloppes, qui fournit une plus faible variation au niveau du décalage vertical (selon y). En se référant à la figure 3, deux régions connexes RS et RI adjacentes (consécutives) ont une frontière F. Par une technique de suivi de contour, on détermine les points des traces de l'image qui sont les plus voisins de la frontière F au-dessus (points tels que $ES_1$, $ES_2$,... $ES_i$, ...$ES_p$) et au-dessous (points tels que $EI_1$, $EI_2$, ..., $EI_i$, ..., $EI_p$) de cette dernière. On forme un contour enveloppe supérieur en reliant les points $ES_1$, $ES_2$,... $ES_i$, ... $ES_p$, et un contour enveloppe inférieur en reliant les points $EI_1$, $EI_2$, ..., $EI_i$, ..., $EI_p$ et l'on retient comme contour frontière lissé celui des deux contours enveloppes qui est le plus rectiligne, c'est-à-dire celui pour lequel on obtient une plus faible valeur de l'expression :

$$\sum_{i=1}^{i=p-1} \left| y_i - y_{i+1} \right|$$

où $y_i$ et $y_{i+1}$ sont les coordonnées profondeur (selon y) de deux points consécutifs quelconques du contour considéré et p est le nombre de traces de l'image.

Si besoin est, chaque région connexe à contours lissés, pour laquelle le nombre de points constitutifs est inférieur à un seuil, peut être agrégée avec la région connexe à contours lissés voisine ayant la valeur moyenne d'amplitude la plus proche.

Les régions connexes à contours lissés retenues, affectées de leur valeur moyenne d'amplitude, peuvent être représentées, dans le système d'axes (x,y), pour former une image , dite image de bancs, associée à l'image de paroi soumise à la segmentation. Les contours entre régions connexes présents sur cette image de bancs, dits contours de stratification, sont chacun représentatifs d'une portion de l'intersection d'un plan de stratification avec la paroi latérale du puits de mesure.

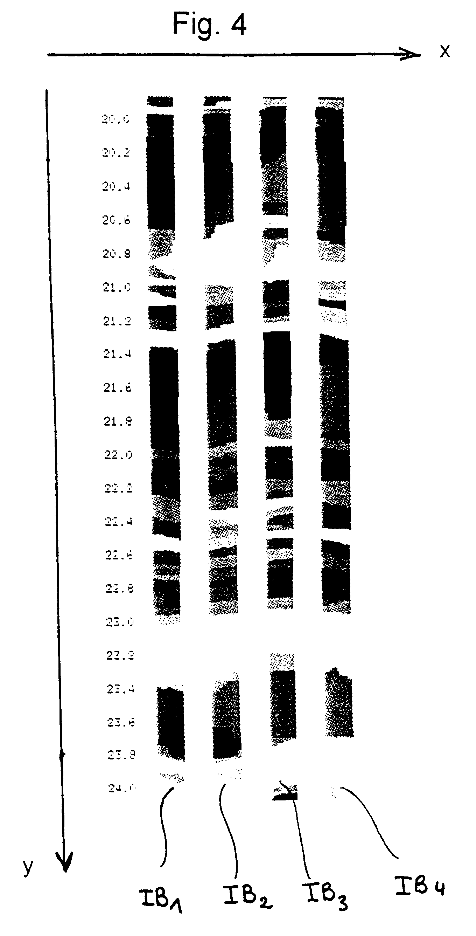

La figure 4 représente, dans le système d'axes (x,y), les images de bancs $IB_1$, $IB_2$, $IB_3$ et $IB_4$ correspondant respectivement aux images électriques $I_1$, $I_2$, $I_3$ et $I_4$, représentées sur la figure 1 et utilisées pour reconstituer l'image de la paroi latérale du puits de mesure.

En utilisant les quatre images de bancs $IB_1$, $IB_2$, $IB_3$ et $IB_4$, on apparie ensuite les contours (contours de stratification) de même polarité, qui se correspondent dans lesdites images de bancs, pour construire des sinusoïdes représentant les limites théoriques des bancs de stratification.

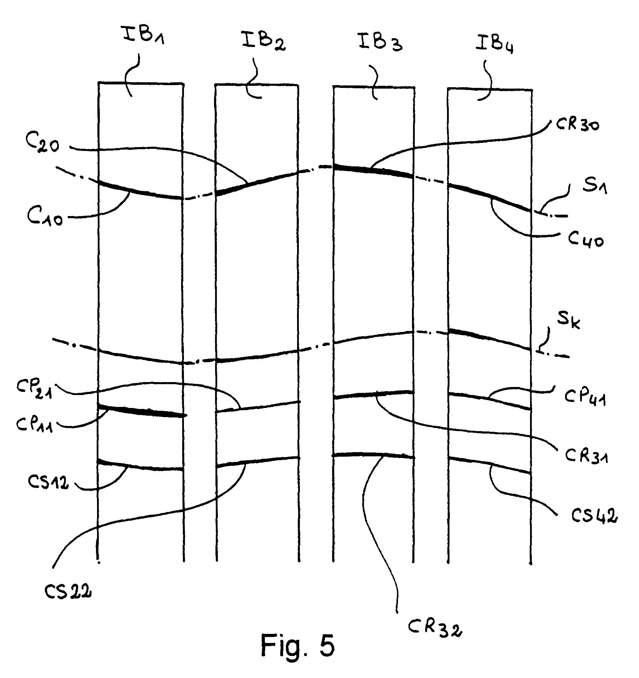

En se référant à la figure 5, cette étape de construction desdites sinusoïdes limites des bancs de stratification, est réalisée comme suit, en prenant comme point de départ des opérations la situation où une sinusoïde $S_k$ limite de bancs a été déterminée.

Parmi les contours de stratification (ci-après contours), qui sont présents sur les quatre images de bancs $IB_1$ à $IB_4$ et qui sont situés en dessous de la sinusoïde $S_k$, on sélectionne un premier contour de référence choisi parmi le contour le plus proche de $S_k$ et le contour rencontré le premier après $S_k$, ledit contour étant le contour $CR_{31}$ situé sur l'image $IB_3$. Dans les images de bancs $IB_1$, $IB_2$ et $IB_4$, qui ne renfermentpas le contour de référence $CR_{31}$, on détermine ensuite les contours de même polarité qui correspondent audit premier contour de référence pour constituer trois contours primaires, ces trois contours étant le contour $CP_{11}$ de l'image $IB_1$, le contour $CP_{21}$ de l'image $IB_2$ et le contour $CP_{41}$ de l'image $IB_4$.

On construit alors toutes les sinusoïdes, qui, chacune, renferment le premier contour de référence $CR_{31}$ et intègrent un à trois des contours primaires $CP_{11}$, $CP_{21}$ et $CP_{41}$ et on retient comme sinusoïde optimale $S_{01}$, celle desdites sinusoïdes ainsi construites, qui présente la plus grande valeur $Q_1$, supérieure à un seuil $Q_s$, d'un critère Q représentatif de la qualité des plans de stratification, ledit critère étant, par exemple, celui qui intègre cinq facteurs comme indiqué précédemment.

On sélectionne ensuite sur l'image de bancs $IB_3$, renfermant le premier contour de référence $CR_{31}$, un second contour de référence consistant en le contour $CR_{32}$ ayant même polarité que le premier contour de référence et le suivant immédiatement. On détermine dans les images de bancs $IB_1$, $IB_2$ et $IB_4$ ne refermant pas le deuxième contour de référence $CR_{32}$, les contours de même polarité qui correspondent au second contour de référence $CR_{32}$ et définissent trois contours secondaires, ces trois contours étant le contour $CS_{12}$ pour l'image $IB_1$, le contour $CS_{22}$ pour l'image $IB_2$ et le contour $CS_{42}$ pour l'image $IB_4$.

On construit alors toutes les sinusoïdes, qui, chacune, renferment le second contour de référence $CR_{32}$ et intègrent un à trois contours choisis parmi les contours secondaires $CS_{12}$, $CS_{22}$ et $CS_{42}$ et les contours primaires $CP_{11}$, $CP_{21}$ et $CP_{41}$ de telle sorte qu'il y ait un contour par image pour ce choix, et l'on retient comme sinusoïde optimale $S_{02}$, celle desdites sinusoïdes qui présente la plus grande valeur $Q_2$, supérieure au seuil $Q_s$, du critère de qualité Q.

On compare les sinusoïdes optimales $S_{01}$ et $S_{02}$ et on valide la sinusoïde $S_{01}$ comme limite de bancs $S_{k+1}$ si la sinusoïde $S_{02}$ est parallèle à la sinusoïde $S_{01}$ ou bien si elle croise $S_{01}$ et présente une valeur $Q_2$ du critère de qualité inférieure à la valeur $Q_1$. La sinusoïde optimale $S_{01}$ étant validée, on marque les contours de cette sinusoïde sur les quatre images de bancs $IB_1$, $IB_2$, $IB_3$ et $IB_4$ ou / et sur les quatre images correspondantes de paroi $I_1$,$I_2$, $I_3$ et $I_4$, comme limite de bancs $S_{k+1}$.

Par contre, si la sinusoïde optimale $S_{02}$ croise la sinusoïde optimale $S_{01}$ et présente une valeur $Q_2$ du critère de qualité supérieure à la valeur $Q_1$, on rejette la sinusoïde optimale $S_{01}$ et on supprime le contour de référence $CR_{31}$.

On répète ensuite la série d'opérations d'appariement de contours, à partir des contours présents sur les quatre images de bancs, qui sont situés en dessous de la sinusoïde limite de bancs $S_{k+1}$ si la sinusoïde $S_{01}$ a été validée ou bien en dessous de la sinusoïde limite de bancs $S_k$ si la sinusoïde $S_{01}$ n'a pas été validée, et ce jusqu'aux derniers contours à apparier présents sur les quatre images de bancs $IB_1$, $IB_2$, $IB_3$ et $IB_4$.

Pour obtenir la première sinusoïde $S_1$ limite de bancs, on opère comme suit.

On sélectionne sur chacune des quatre images de bancs $IB_1$ à $IB_4$, le premier contour et l'on choisit parmi lesdits premiers contours sélectionnés, le contour de plus faible profondeur, dans le cas présent le contour $CR_{30}$ sur l'image $IB_3$, comme contour de référence. On détermine ensuite dans les images de bancs $IB_1$, $IB_2$ et $IB_4$, qui ne renferment pas le contour de référence, les contours de même polarité, qui correspondent au contour de référence et définissent trois contours primaires, à savoir contour $C_{10}$ sur l'image $IB_1$, contour $C_{20}$ sur l'image $IB_2$ et contour $C_{40}$ sur l'image $IB_4$. A partir desdits contours primaires $C_{10}$, $C_{20}$ et $C_{40}$ et du contour de référence $C_{30}$, on construit la sinusoïde $S_1$ limite de bancs soit (i) par pointé, si lesdits quatre contours sont bien marqués et permettent de réaliser un tel pointé, ou bien (ii) en appliquant le processus décrit ci-dessus pour déterminer la sinusoïde $S_{k+1}$.

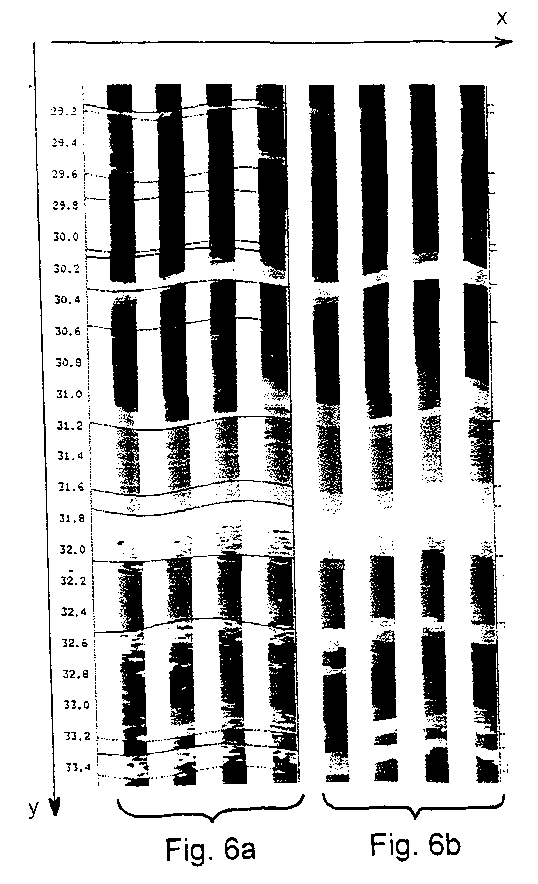

Les images 6a et 6b montrent, pour un intervalle de profondeur différent de celui indiqué sur les figures 1 et 5, des sinusoïdes limites de bancs marquées sur les images de paroi FMS (figure 6a) et les images des régions connexes associées représentant les bancs de stratification (figure 6b).

**Revendications**

1. Méthode de détermination automatique des bancs de stratification dans un milieu, à partir d'images de puits ou de déroulé de carottes de ce milieu, chaque image étant représentative d'une bande de la paroi latérale du puits ou de la carotte, en référence à un axe vertical y pour la profondeur et à un axe horizontal x pour les azimuts, et étant définie par une pluralité de traces ou colonnes, qui sont dirigées, chacune, selon l'axe y, à partir de points espacés le long de l'axe x, et représentent la valeur d'un paramètre associé à une caractéristique de ladite paroi mesurée en fonction de la profondeur, la paroi latérale du puits ou de la carotte étant reconstituée par association de N images de paroi, ladite méthode se caractérisant en ce qu'elle consiste à :

   - segmenter chacune des N images de paroi, qui sont utilisées pour reconstituer l'image de la paroi latérale du puits ou de la carotte, en un premier ensemble de composantes connexes, chaque composante connexe consistant en une zone homogène de points obtenue par regroupement de points des traces de l'image de paroi de telle sorte que la différence des valeurs prises par un critère associé à la caractéristique imagée en deux points voisins quelconques de ladite zone ait une valeur inférieure à un seuil,
   - affecter d'un coefficient unique tous les pixels d'une même composante connexe,
   - transformer le premier ensemble de composantes connexes en un deuxième ensemble consistant uniquement en composantes connexes, dites régions connexes, qui touchent chacune aux deux bords droit et gauche de l'image, lesdites régions connexes étant constituées de toutes les composantes connexes formant régions connexes, qui sont déjà contenues dans le premier ensemble, et également de régions connexes, qui sont formées, à partir des composantes connexes du premier ensemble ne touchant pas chacune aux deux bords droit et gauche de l'image, dites zones connexes, par fusion d'une zone connexe donnée avec la zone connexe voisine la plus proche, en opérant la fusion de proche en proche et en réattribuant, après chaque fusion de deux zones connexes, un nouveau coefficient à la zone connexe résultante avant de procéder à une nouvelle fusion à partir des zones connexes restantes incluant ladite zone connexe résultante,
   - générer, pour chaque couple de régions connexes consécutives, un contour lissé marquant la frontière des deux régions connexes dudit couple, en recherchant, par suivi de contour, un contour enveloppe supérieur et un contour enveloppe inférieur de ladite frontière et en retenant, comme contour lissé, celui des deux contours enveloppes, qui fournit une plus faible variation au niveau du décalage vertical ; et
   - produire, dans le système d'axes (x,y), une image formée des régions connexes à contours lissés qui sont retenues, cette image étant dite image de bancs associée à l'image de paroi soumise à la segmentation et les contours entre régions connexes adjacentes présents sur cette image de bancs, dits contours de stratification, étant chacun représentatifs d'une portion de l'intersection d'un plan de stratification avec la paroi latérale du puits ou de la carotte.

2. Méthode selon la revendication 1, **caractérisée en ce que** le critère associé à la caractéristique imagée est un paramètre, notamment amplitude, associé à ladite caractéristique.

3. Méthode selon la revendication 2, **caractérisée en ce que** le coefficient unique affectant tous les pixels d'une même composante connexe est la valeur moyenne du paramètre, notamment amplitude, associé à la caractéristique imagée pour les points des traces regroupés dans ladite composante connexe.

4. Méthode selon la revendication 3, **caractérisée en ce que** la fusion des zones connexes est réalisée en regroupant une zone connexe de valeur moyenne donnée du paramètre avec la zone connexe voisine ayant la valeur moyenne du paramètre plus proche par défaut, en opérant la fusion de proche en proche, à partir de la zone connexe de plus forte valeur moyenne du paramètre et par ordre décroissant de valeur moyenne du paramètre affectée à chaque zone connexe, et en recalculant, après chaque fusion de deux zones connexes, la valeur moyenne du paramètre de la zone connexe résultante avant de procéder à une nouvelle fusion à partir des zones connexes restantes incluant ladite zone connexe résultante.

5. Méthode selon l'une des revendications 1 à 4, **caractérisée en ce qu'**elle consiste, en outre, à agréger chaque région connexe à contours lissés, pour laquelle, le nombre de points constitutifs est inférieur à un seuil, avec la région connexe à contours lissés voisine la plus proche, par exemple celle ayant la valeur moyenne du paramètre la plus proche.

6. Méthode selon l'une des revendications 1 à 5, **caractérisée en ce qu'**elle comporte l'étape additionnelle consistant, à partir de N images de bancs dérivant chacune de l'une des N images de paroi utilisées pour reconstituer la paroi latérale du puits ou de la carotte, à apparier les contours de stratification de même polarité qui se correspondent dans lesdites N images de bancs, pour construire des sinusoïdes représentant les limites des bancs de stratification.

7. Méthode selon la revendication 6, **caractérisée en ce que** l'étape d'appariement des contours de stratification, dénommés ci-après contours, pour la construction des sinusoïdes limites de bancs de stratification est mise en oeuvre en réalisant une série d'opérations, qui, en prenant comme point de départ la situation où une sinusoïde $S_k$ limite de bancs a été déterminée, consiste à :

a) sélectionner parmi les contours présents sur les N images de bancs, qui sont situés en dessous de la sinusoïde $S_k$, un premier contour de référence choisi parmi le contour le plus proche de $S_k$ et le contour rencontré le premier après $S_k$ ;
b) déterminer dans les images de bancs ne renfermant pas le premier contour de référence, les contours de même polarité qui correspondent audit premier contour de référence et représentent N-1 contours primaires ;
c) construire toutes les sinusoïdes, qui, chacune, renferment le premier contour de référence et intègrent un nombre desdits contours primaires allant de 1 à N-1 et retenir, comme sinusoïde optimale $S_{01}$, celle desdites sinusoïdes qui présente la plus grande valeur $Q_1$, supérieure à un seuil $Q_s$, d'un critère Q représentatif de la qualité des plans de stratification ;
d) sélectionner sur l'image de bancs renfermant le premier contour de référence, un second contour de référence consistant en le contour ayant même polarité que le premier contour de référence et le suivant immédiatement ;
e) déterminer dans les images de bancs ne renfermant pas le deuxième contour de référence, les contours de même polarité qui correspondent au second contour de référence et définissent N-1 contours secondaires ;
f) construire toutes les sinusoïdes, qui, chacune, renferment le second contour de référence et intègrent 1 à N-1 contours choisis parmi l'ensemble de tous les contours primaires et secondaires de telle sorte qu'il y ait un contour par image pour ce choix et retenir, comme sinusoïde optimale $S_{02}$, celle desdites sinusoïdes qui présente la plus grande valeur $Q_2$, supérieure au seuil $Q_s$, du critère de qualité Q ;
g) comparer les sinusoïdes optimales $S_{01}$ et $S_{02}$ et (i) valider la sinusoïde $S_{01}$ comme limite de bancs $S_{k+1}$ si la sinusoïde $S_{02}$ est parallèle à $S_{01}$ ou si elle croise $S_{01}$ et présente une valeur $Q_2$ du critère de qualité inférieure à $Q_1$ et marquer les contours de la sinusoïde validée $S_{01}$ sur les N images de bancs comme limite de bancs $S_{k+1}$ ou (ii) rejeter la sinusoïde optimale $S_{01}$ et supprimer le premier contour de référence, si la sinusoïde optimale $S_{02}$ croise la sinusoïde $S_{01}$ et présente une valeur $Q_2$ du critère de qualité supérieure à la valeur $Q_1$ ; et
h) répéter la série d'opérations a) à g) à partir des contours présents sur les N images de bancs, qui sont situés en dessous de la sinusoïde $S_{k+1}$ dans le cas d'opérations selon g(i) ou en dessous de la sinusoïde $S_k$ dans le cas d'opérations selon g(ii), et ce jusqu'aux derniers contours à apparier présents sur les N images de bancs.

8. Méthode selon la revendication 7, **caractérisée en ce que** la première sinusoïde $S_1$ limite de bancs est obtenue en réalisant la séquence d'opérations consistant à :

- sélectionner sur chacune des N images de bancs le premier contour,
- choisir parmi lesdits premiers contours sélectionnés, le contour de plus faible profondeur comme contour de référence,
- déterminer dans les images de bancs ne renfermant pas le contour de référence, les contours de même polarité, qui correspondent au contour de référence et définissent N-1 contours primaires ; et

- construire la sinusoïde optimale $S_1$ soit ($\alpha$) par pointé, soit ($\beta$) en appliquant le processus selon les points c) à g).

9. Méthode selon l'une des revendications 1 à 8, **caractérisée en ce que**, lors de la segmentation de chaque image de paroi en composantes connexes, le regroupement de points des traces de l'image de paroi en une zone homogène constituant une composante connexe, est réalisé de telle sorte que la différence des valeurs prises par un paramètre associé à la caractéristique imagée , en particulier l'amplitude de ladite caractéristique, en deux points voisins quelconques de ladite zone ait une valeur inférieure à un seuil S et que, lors dudit regroupement, la différence entre la valeur du paramètre en un nouveau point à regrouper et la moyenne des valeurs dudit paramètre pour les points déjà regroupés ait également une valeur inférieure à un seuil $S_m$.

10. Méthode selon l'une des revendications 1 à 8, **caractérisée en ce que**, lors de la segmentation de chaque image de paroi en composantes connexes, le regroupement de points des traces de l'image de paroi en une zone homogène constituant une composante connexe, est réalisé de telle sorte que la différence des valeurs prises par le paramètre associé à la caractéristique imagée, par exemple l'amplitude de ladite caractéristique, en deux points voisins quelconques de ladite zone suivant l'axe x ait une valeur inférieure à un seuil $S_x$, que la différence des valeurs prises par ledit paramètre en deux points voisins quelconques de la zone suivant l'axe y ait une valeur inférieure à un seuil $S_y$ et que la différence entre la valeur du paramètre en un nouveau point à regrouper et la moyenne des valeurs dudit paramètre pour les points déjà regroupés ait également une valeur inférieure à un seuil $S_m$.

11. Méthode selon la revendication 10, **caractérisée en ce que** le seuil $S_x$ a une valeur supérieure au seuil $S_y$.

12. Méthode selon la revendication 10 ou 11, **caractérisée en ce que** le seuil $S_m$ a une valeur supérieure au seuil $S_x$.

13. Méthode selon l'une des revendications 1 à 12, **caractérisée en ce que** préalablement à leur segmentation en composantes connexes, les images de paroi sont soumises à un filtrage pour en éliminer les hétérogénéités planaires du type des fractures ouvertes.

14. Méthode selon l'une des revendications 7 à 13, **caractérisée en ce que** la correspondance entre le contour de référence et les N-1 contours de même polarité que le contour de référence, est réalisée de telle sorte que la variation d'épaisseur du banc limité supérieurement par lesdits contours, en passant de l'image contenant le contour de référence à l'une quelconque des autres images, soit inférieure à un seuil.

15. Méthode selon l'une des revendications 1 à 14, **caractérisée en ce que** les images de paroi consistent en images, notamment images électriques, de paroi de puits forés dans un milieu géologique.

16. Méthode selon l'une des revendications 1 à 14 , **caractérisée en ce que** les images de paroi consistent en images de déroulés de carottes prélevées dans un milieu géologique.


**Patentansprüche**

1. Verfahren zur automatischen Bestimmung von Stratifikationsbanken in einer Umgebung, ausgehend von Abbildungen von Bohrlöchern oder des Verlaufs von Bohrkernen dieser Umgebung, wobei jedes Bild ein Band der Seitenfläche des Bohrlochs oder des Bohrkerns bezogen auf eine vertikale Achse y für die Tiefe und eine horizontale Achse x für den Azimut wiedergibt und durch mehrere Bahnen oder Säulen definiert ist, die ausgehend von mit gegenseitigem Abstand entlang der x-Achse angeordneten Punkten jeweils in Richtung der y-Achse ausgerichtet sind und den Wert eines Parameters wiedergeben, der einer als Funktion der Tiefe gemessenen Kennlinie der Wand zugeordnet ist, wobei die Seitenfläche des Bohrlochs oder des Bohrkerns durch Verbinden von N Flächenbildern rekonstruiert wird, wobei das Verfahren durch die folgenden Schritte **gekennzeichnet** ist:

- Segmentieren jedes der N Flächenbilder, die zur Rekonstruktion der Abbildung der Seitenfläche des Bohrlochs oder des Bohrkems verwendet werden, in eine erste Gruppe von zusammenhängenden Komponenten, wobei jede der zusammenhängenden Komponenten aus einer homogenen Zone von Punkten besteht, die erhalten wird, indem Punkte der Bahnen des Flächenbildes derart umgruppiert werden, daß die Differenz der von einem der abgebildeten Kennlinie zugeordneten Kriterium erfaßten Werte an zwei beliebigen benachbarten Punkten der Zone unterhalb eines Schwellenwertes liegt,

- Anwenden eines einzigen Koeffizienten auf sämtliche Pixel der selben zusammenhängenden Komponente,

- Umwandeln der ersten Gruppe der zusammenhängenden Komponenten in eine zweite Gruppe, die ausschließlich aus als zusammenhängende Bereiche bezeichneten zusammenhängenden Komponenten besteht, welche am rechten und linken Rand der Abbildung liegen, wobei die zusammenhängenden Bereiche aus sämtlichen, die zusammenhängenden Bereiche bildenden zusammenhängenden Komponenten, welche bereits in der ersten Gruppe enthalten sind, und ferner aus zusammenhängenden Bereichen bestehen, die aus zusammenhängenden Komponenten der ersten Gruppe gebildet sind, von denen nicht jede am rechten und linken Rand der Abbildung liegt, und die als zusammenhängende Zonen bezeichnet werden, durch Verschmelzen einer gegebenen zusammenhängenden Zone mit der nächstgelegenen benachbarten zusammenhängenden Zone, wobei die Verschmelzung schrittweise erfolgt und nach jeder Verschmelzung zweier zusammenhängender Zonen der sich ergebenden zusammenhängenden Zone ein neuer Koeffizient zugewiesen wird, bevor eine neue Verschmelzung ausgehend von den verbleibenden zusammenhängenden Zonen, einschließlich der resultierenden zusammenhängenden Zone, durchgeführt wird,

- Erzeugen, für jedes Paar aufeinanderfolgender zusammenhängender Bereiche, einer geglätteten Kontur, welche die Grenze der beiden zusammenhängenden Bereiche des Paares markiert, indem durch Folgen der Kontur eine obere Hüllkontur und eine untere Hüllkontur der Grenze ermittelt wird und als geglättete Kontur diejenige der beiden Hüllkonturen behalten wird, welche hinsichtlich der vertikalen Verschiebung die geringste Abweichung zeigt, und

- Erzeugen, im System der Achsen (x, y), einer Abbildung, die aus den zusammenhängenden Bereichen mit den behaltenen geglätteten Konturen gebildet ist, wobei diese als Bankabbildung bezeichnete Abbildung mit dem der Segmentierung unterzogenen Flächenbild und den auf der Bankabbildung vorhandenen Konturen zwischen benachbarten zusammenhängenden Bereichen, die als Stratifikationskonturen bezeichnet werden, in Verbindung gebracht wird, wobei jede der Konturen einen Bereich des Schnittpunkts einer Stratifikationsebene mit der Seitenfläche des Bohrlochs oder des Bohrkerns repräsentiert.

2. Verfahren nach Anspruch 1, **dadurch gekennzeichnet, daß** das der abgebildeten Kennlinie zugeordnete Kriterium ein der Kennlinie zugeordneter Parameter, insbesondere die Amplitude, ist.

3. Verfahren nach Anspruch 2, **dadurch gekennzeichnet, daß** der einzige Koeffizient, der auf sämtliche Pixel der selben zusammenhängenden Komponente einwirkt, der Mittelwert des der abgebildeten Kennlinie zugeordneten Parameters, insbesondere der Amplitude, für die in der zusammenhängenden Komponente neugruppierten Punkte der Bahnen ist.

4. Verfahren nach Anspruch 3, **dadurch gekennzeichnet, daß** die Verschmelzung der zusammenhängenden Zonen durch das Umgruppieren einer zusammenhängenden Zone mit einem gegebenen Mittelwert des Parameters und der benachbarten zusammenhängenden Zone mit dem nächstliegenden geringeren Mittelwert des Parameters erfolgt, wobei die Verschmelzung ausgehend von der zusammenhängenden Zone mit dem höchsten Mittelwert des Parameters in absteigender Reihenfolge des Mittelwerts des Parameters für jede zusammenhängende Zone schrittweise ausgeführt wird, und indem nach jeder Verschmelzung zweier zusammenhängender Zonen der Mittelwert des Parameters der resultierenden zusammenhängenden Zone neu berechnet wird, bevor eine weitere Verschmelzung ausgehend von den verbleibenden zusammenhängenden Zonen, einschließlich der resultierenden zusammenhängenden Zone, durchgeführt wird.

5. Verfahren nach einem der Ansprüche 1 bis 4, **dadurch gekennzeichnet, daß** es ferner das Zusammenfügen jedes zusammenhängenden Bereichs mit geglätteten Konturen, dessen Anzahl der ihn bildenden Punkte kleiner als ein Schwellenwert ist, mit dem nächstgelegenen benachbarten zusammenhängenden Bereich mit geglätteten Konturen umfaßt, beispielsweise dem Bereich mit dem nächstgelegenen Mittelwert des Parameters.

6. Verfahren nach einem der Ansprüche 1 bis 5, **dadurch gekennzeichnet, daß** es ferner einen zusätzlichen Schritt aufweist, bei dem, ausgehend von N Bankabbildungen, die jeweils aus einem der N Flächenbilder, die zum Rekonstruieren der Seitenfläche des Bohrlochs oder des Bohrkerns verwendet wurden, abgeleitet sind, die Konturen der Stratifikation mit der selben Polarität, die sich in den N Bankabbildungen entsprechen, zu Paaren verbunden werden, um Sinuskurven zu bilden, welche die Grenzen der Stratifikationsbänke wiedergeben.

7. Verfahren nach Anspruch 6, **dadurch gekennzeichnet, daß** der Schritt der Paarbildung der Stratifikationskonturen, die im folgenden als Konturen bezeichnet werden, zur Bildung von Grenz-Sinuskurven der Stratifikationsbänke durch eine Reihe von Vorgängen ausgeführt wird, die, ausgehend von einer Situation, in der eine Grenz-Sinuskurve $S_k$ der Bänke ermittelt wurde, umfaßt:

a) Auswählen aus den auf den N Bankabbildungen vorhandenen Konturen, die sich unterhalb der Sinuskurve $S_k$ befinden, einer ersten Referenzkontur, die unter der $S_k$ nächstgelegenen Kontur und der als erste nach $S_k$ auftretenden Kontur gewählt ist;

b) Bestimmen in den Bankabbildungen, welche die erste Referenzkontur nicht einschließen, der Konturen mit gleicher Polarität, die der ersten Referenzkontur entsprechen und N-1 Primärkonturen repräsentieren;

c) Erstellen sämtlicher Sinuskurven, von denen jede die erste Referenzkontur einschließt und eine Zahl der Primärkonturen von 1 bis N-1 integriert, und Zurückbehalten derjenigen der Sinuskurven als optimale Sinuskurve $S_{01}$, welche den höchsten, über dem Schwellenwert $Q_s$ liegenden Wert $Q_1$ eines Kriteriums aufweist, das die Qualität der Stratifikationsebenen wiedergibt;

d) Wählen, auf der die erste Referenzkontur einschließenden Bankabbildung, einer zweiten Referenzkontur bestehend aus der Kontur mit der selben Polarität wie die erste Referenzkontur und der unmittelbar folgenden Kontur;

e) Bestimmen, in den Bankabbildungen, welche die zweite Referenzkontur nicht einschließen, der Konturen der selben Polarität, welche der zweiten Referenzkontur entsprechen und N-1 zweite Konturen bilden;

f) Erstellen sämtlicher Sinuskurven, von denen jede die zweite Referenzkontur einschließt und 1 bis N-1 Konturen integriert, die aus der Gesamtheit der ersten und zweiten Konturen ausgewählt sind, derart daß für die Wahl eine Kontur pro Abbildung existiert, und Behalten derjenigen Sinuskurven als optimale Sinuskurve $S_{02}$, welche den größten, über dem Schwellenwert $Q_s$ liegenden Wert $Q_2$ des Qualitätskriteriums $Q$ aufweist;

g) Vergleichen der optimalen Sinuskurven $S_{01}$ und $S_{02}$ und (i) Validieren der Sinuskurve $S_{01}$ als Bankgrenze $S_{k+1}$, wenn die Sinuskurve $S_{02}$ parallel zu $S_{01}$ verläuft oder $S_{01}$ kreuzt und einen Wert $Q_2$ des Qualitätskriteriums hat, der geringer als $Q_1$ ist, und Markieren der Konturen der validierten Sinuskurve $S_{01}$ der N Abbildungen der Bänke als Grenze der Bänke $S_{k+1}$, oder (ii) Zurückweisen der optimalen Sinuskurve $S_{01}$ und Unterdrücken der ersten Referenzkontur, wenn die optimale Sinuskurve $S_{02}$ die Sinuskurve $S_{01}$ kreuzt und einen Wert $Q_2$ des Qualitätskriteriums aufweist, der höher als der Wert $Q_1$ ist; und

h) Wiederholen der Reihenfolge der Vorgänge a) bis g) ausgehend von auf den N Bankabbildungen vorhandenen Konturen, die sich im Falle der Vorgänge nach g(i) unterhalb der Sinuskurve $S_{k+1}$ oder im Falle der Vorgänge nach g(ii) unterhalb der Sinuskurve $S_k$ befinden, und zwar bis zu den letzten auf den N Bankabbildungen vorhandenen paarweise anzuordnenden Konturen.

8. Verfahren nach Anspruch 7, **dadurch gekennzeichnet, daß** die erste die Bänke begrenzende Sinuskurve $S_1$ erhalten wird, indem die folgende Reihe von Vorgängen durchgeführt wird:

- Wählen der ersten Kontur auf jeder der N Bankabbildungen,

- Auswählen der Kontur mit der geringsten Tiefe unter den gewählten ersten Konturen als Referenzkontur,

- Bestimmen, in den Bankabbildungen, welche die Referenzkontur nicht umfassen, der Konturen mit derselben Polarität, welche der Referenzkontur entsprechen und N-1 erste Konturen bilden; und

- Erstellen der optimalen Sinuskurve $S_1$ sei es ($\alpha$) durch Spitzen oder ($\beta$) durch Anwenden des Verfahrens nach den Punkten c) bis g).

9. Verfahren nach einem der Ansprüche 1 bis 8, **dadurch gekennzeichnet, daß** bei der Segmentierung der Flächenbilder in zusammenhängende Komponenten das Umgruppieren der Punkte der Bildspuren in eine homogene Zone, die eine zusammenhängende Komponente bildet, derart ausgeführt wird, **daß** die Differenz zwischen den Werten, die von einem Parameter der abgebildeten Kennlinie, insbesondere der Amplitude der Kennlinie, erfaßt werden, an zwei beliebigen benachbarten Punkten der Zone einen unter einem Schwellenwert S liegenden Wert hat, und **daß** bei der Umgruppierung die Differenz zwischen dem Wert des Parameters an einem neuen, umzugruppierenden Punkt und dem Mittelwert des Parameters der bereits umgruppierten Punkte ebenfalls einen unter einem Schwellenwert $S_m$ liegenden Wert hat.

10. Verfahren nach einem der Ansprüche 1 bis 8, **dadurch gekennzeichnet, daß** beim Segmentieren jedes Flächenbildes in zusammenhängende Komponenten das Umgruppieren von Punkten der Flächenbildspuren in eine homogene Zone, die eine zusammenhängende Komponente bildet, derart erfolgt, **daß** die Differenz zwischen den Werten, die von einem Parameter der abgebildeten Kennlinie, insbesondere derAmplitude der Kennlinie, erfaßt werden, an zwei beliebigen benachbarten Punkten der Zone entlang der x-Achse einen unter einem Schwellenwert $S_x$ liegenden Wert hat, **daß** die Differenz zwischen den Werten, die von einem Parameter erfaßt werden, an zwei beliebigen benachbarten Punkten der Zone entlang der y-Achse einen unter einem Schwellenwert $S_y$ liegenden Wert hat, und **daß** bei der Umgruppierung die Differenz zwischen dem Wert des Parameters an einem neuen; umzugruppierenden Punkt und dem Mittelwert des Parameters der bereits umgruppierten Punkte ebenfalls einen unter einem Schwellenwert $S_m$ liegenden Wert hat.

11. Verfahren nach Anspruch 10, **dadurch gekennzeichnet, daß** der Schwellenwert $S_x$ einen über dem Schwellenwert $S_y$ liegenden Wert hat.

12. Verfahren nach Anspruch 10 oder 11, **dadurch gekennzeichnet, daß** der Schwellenwert $S_m$ einen höheren Wert als der Schwellenwert $S_x$ hat.

13. Verfahren nach einem der Ansprüche 1 bis 12, **dadurch gekennzeichnet, daß** vor der Segmentierung in zusammenhängende Komponenten die Flächenbilder einer Filterung unterzogen werden, um planare Unregelmäßigkeiten vom Typ offener Brüche zu eleminieren.

14. Verfahren nach einem der Ansprüche 7 bis 13, **dadurch gekennzeichnet, daß** die Übereinstimmung der Referenzkontur und der N-1 Konturen der selben Polarität wie die Referenzkontur, derart erreicht wird, **daß** die Schwankung in der Dicke der durch die Konturen begrenzten Bank beim Übergang von dem die Referenzkontur aufweisenden Bild in ein beliebiges anderes Bild unter einem Schwellenwert liegt.

15. Verfahren nach einem der Ansprüche 1 bis 14, **dadurch gekennzeichnet, daß** die Flächenbilder aus Bildern, insbesondere elektrischen Bildern, der Flächen von in einer geologischen Umgebung gebohrten Bohrlöchern bestehen.

16. Verfahren nach einem der Ansprüche 1 bis 4, **dadurch gekennzeichnet, daß** die Flächenbilder aus Bildern des Verlaufs von Bohrkernen bestehen, die aus einer geologischen Umgebung entnommen wurden.

## Claims

1. Method for automatically determining the bedding in a formation, from images of boreholes or developments of core samples of this formation, each image being representative of a slice of the side wall of the borehole or of the core sample, with reference to a vertical axis y for depth and a horizontal axis x for azimuth, and being defined by a plurality of traces or columns, each of which is directed along the y axis from points spaced along the x axis and represents the value of a parameter associated with a characteristic of the said wall, measured as a function of depth, the side wall of the borehole or of the core sample being reconstructed by combining N wall images, the said method being **characterized in that** it consists in:

   - segmenting each of the N wall images which are used to reconstruct the image of the side wall of the borehole or of the core sample, into a first set of connected components, each connected component consisting of a homogeneous zone of points which is obtained by grouping points of the traces of the wall image in such a way that the difference in the values taken by a criterion associated with the imaged characteristic at any two neighbouring points in the said zone has a value below a threshold,
   - assigning a unique coefficient to all the pixels in a given connected component,
   - converting the first set of connected components into a second set consisting only of connected components, referred to as connected regions, which each touch the two edges, right and left, of the image, the said connected regions consisting of all the connected components forming connected regions which are already contained in the first set, and also connected regions which are formed from the connected components of the first set which do not each touch the two edges, right and left, of the image, referred to as connected zones, by merging a given connected zone with the closest neighbouring connected zone, carrying out the merge gradually and, after each merge of two connected zones, reassigning a new coefficient to the resultant connected zone before carrying out a new merge using the remaining connected zones including the said resultant connected zone,

- for each pair of consecutive connected regions, generating a smoothed contour marking the boundary of the two connected regions of the said pair by using contour tracking to find an upper envelope contour and a lower envelope contour for the said boundary and by keeping as the smoothed contour that of the two envelope contours which gives a lower variation in the level of the vertical shift; and

- producing in the (x,y) axis system an image formed by the connected regions with smoothed contours which are kept, this image being referred to as the bed image associated with the wall image subjected to the segmenting, and the contours between adjacent connected regions present on this bed image, referred to as bedding contours, each being representative of a portion of the intersection of a bedding plane with the side wall of the borehole or of the core sample.

2. Method according to Claim 1, **characterized in that** the criterion associated with the imaged characteristic is a parameter, in particular amplitude, associated with the said characteristic.

3. Method according to Claim 2, **characterized in that** the unique coefficient assigned to all the pixels of a given connected component is the mean value of the parameter, in particular amplitude, associated with the imaged characteristic for the trace points grouped in the said connected component.

4. Method according to Claim 3, **characterized in that** the connected zones are merged by grouping a connected zone having a given mean value of the parameter with the neighbouring connected zone which has the next highest mean value of the parameter, carrying out the merge gradually, starting from the connected zone having the highest mean value of the parameter and in decreasing order of the parameter mean value assigned to each connected zone, and after each merge of two connected zones, recalculating the mean value of the parameter of the resultant connected zone before carrying out a new merge using the remaining connected zones including the said resultant connected zone.

5. Method according to one of Claims 1 to 4, **characterized in that** it furthermore consists in aggregating each connected region having smoothed contours, for which the number of constituent points is below a threshold, with the closest neighbouring connected region having smoothed contours, for example the one having the closest mean value of the parameter.

6. Method according to one of Claims 1 to 5, **characterized in that** it includes the further step consisting, using N bed images which are each derived from one of the N- wall images used to reconstruct the side wall of the borehole or of the core sample, in matching the bedding contours of the same polarity which correspond to one another in the said N bed images, in order to construct sinusoids representing the bedding boundaries.

7. Method according to Claim 6, **characterized in that** the step of matching the bedding contours, hereafter referred to as contours, to construct the bedding boundary sinusoids is implemented by carrying out a series of operations which, taking as a starting point the situation in which one bed boundary sinusoid $S_k$ has been determined, consists in:

a) selecting, from the contours which are present in the N bed images and lie below the sinusoid $S_k$, a first reference contour chosen from between the contour closest to $S_k$ and the contour encountered first after $S_k$;
b) determining, in the bed images which do not contain the first reference contour, the contours of the same polarity which correspond to the said first reference contour and represent N-1 primary contours;
c) constructing all the sinusoids which each contain the first reference contour and incorporate a number of the said primary contours ranging from 1 to N-1, and keeping as the optimum sinusoid $S_{01}$ the one of the said sinusoids which has the highest value $Q_1$, greater than a threshold $Q_s$, of a criterion Q representative of the quality of the bedding planes;
d) selecting, on the bed image containing the first reference contour, a second reference contour consisting of the contour which has the same polarity as the first reference contour and immediately follows it;
e) determining, in the bed images which do not contain the second reference contour, the contours of the same polarity which correspond to the second reference contour and define N-1 secondary contours;
f) constructing all the sinusoids which each contain the second reference contour and incorporate from 1 to N-1 contours chosen from the set of all the primary and secondary contours, so that there is one contour per image for this choice, and keeping as the optimum sinusoid $S_{02}$ the one of the said sinusoids which has the highest value $Q_2$, greater than the threshold $Q_s$, of the quality criterion Q;

g) comparing the optimum sinusoids $S_{01}$ and $S_{02}$ and (i) validating the sinusoid $S_{01}$ as the bed boundary $S_{k+1}$ if the sinusoid $S_{02}$ is parallel to $S_{01}$ or if it crosses $S_{01}$ and has a value $Q_2$ of the quality criterion below $Q_1$, and marking the contours of the validated sinusoid $S_{01}$ on the N bed images as the bed boundary $S_{k+1}$ or (ii) rejecting the optimum sinusoid $S_{01}$ and eliminating the first reference contour if the optimum sinusoid $S_{02}$ crosses the sinusoid $S_{01}$ and has a value $Q_2$ of the quality criterion greater than the value $Q_1$; and

h) repeating the series of operations a) to g) using the contours which are present on the N bed images and lie below the sinusoid $S_{k+1}$, in the case of operations according to g(i), or below the sinusoid $S_k$ in the case of operations according to g(ii), and as far as the last contours to be matched which are present on the N bed images.

**8.** Method according to Claim 7, **characterized in that** the first bed boundary sinusoid $S_1$ is obtained by performing the sequence of operations consisting in:

- selecting, on each of the N bed images, the first contour,
- choosing, from the said selected first contours, the contour having least depth as the reference contour,
- determining, in the bed images which do not contain the reference contour, the contours of the same polarity which correspond to the reference contour and define N-1 primary contours; and
- constructing the optimum sinusoid $S_1$ either ($\alpha$) by picking or ($\beta$) by applying the process according to points c) to g) .

**9.** Method according to one of Claims 1 to 8, **characterized in that**, during the segmentation of each wall image into connected components, the grouping of points of the traces of the wall image in a homogeneous zone constituting a connected component is carried out in such a way that the difference in the values taken by a parameter associated with the imaged characteristic, in particular the amplitude of the said characteristic, at any two neighbouring points in the said zone has a value below a threshold S and, during the said grouping, the difference between the value of the parameter at a new point to be grouped and the mean of the values of the said parameter for the points already grouped also has a value below a threshold $S_m$.

**10.** Method according to one of Claims 1 to 8, **characterized in that**, during the segmentation of each wall image into connected components, the grouping of points of the traces of the wall image into a homogeneous zone constituting a connected component is carried out in such a way that the difference in the values taken by the parameter associated with the imaged characteristic, for example the amplitude of the said characteristic at any two neighbouring points in the said zone along the x axis has a value below a threshold $S_x$, the difference in the values taken by the said parameter at any two neighbouring points in the zone along the y axis has a value below a threshold $S_y$, and the difference between the value of the parameter at a new point to be grouped and the mean of the values of the said parameter for the points already grouped also has a value below a threshold $S_m$.

**11.** Method according to Claim 10, **characterized in that** the threshold $S_x$ has a value greater than the threshold $S_y$.

**12.** Method according to Claim 10 or 11, **characterized in that** the threshold $S_m$ has a value greater than the threshold $S_x$.

**13.** Method according to one of Claims 1 to 12, **characterized in that**, before they are segmented into connected components, the wall images are subjected to filtering to remove planar heterogeneities of the open fracture type.

**14.** Method according to one of Claims 7 to 13, **characterized in that** the correspondence between the reference contour and the N-1 contours of the same polarity as the reference contour is effected in such a way that the variation in thickness of the bed bounded at the top by the said contours, when passing from the image containing the reference contour to any one of the other images, is below a threshold.

**15.** Method according to one of Claims 1 to 14, **characterized in that** the wall images consist of images, in particular electrical images, of the wall of boreholes drilled in a geological formation.

**16.** Method according to one of Claims 1 to 14, **characterized in that** the wall images consist of images of developments of core samples taken from a geological formation.

Fig. 1

# Fig. 2

# Fig. 3

## Fig. 4

Fig. 5

Fig. 6a    Fig. 6b